# EUROPEAN PATENT SPECIFICATION

(11) **EP 4 437 165 B1**
(45) Date of publication and mention of the grant of the patent: **30.07.2025**
(21) Application number: 22822340.0
(22) Date of filing: 23.11.2022
(51) Int. Cl.: C25B 3/26, C25B 9/23, C25B 15/08, C25B 1/02

(54) **SYSTEM AND METHOD FOR INTEGRATED CO2 CAPTURE AND HYDROGEN PRODUCTION**
SYSTEM UND VERFAHREN FÜR INTEGRIERTE CO2-ABSCHEIDUNG UND WASSERSTOFFHERSTELLUNG
SYSTÈME ET PROCÉDÉ DE CAPTURE INTÉGRÉE DU CO2 ET PRODUCTION D'HYDROGÈNE

(30) Priority: 25.11.2021 EP 21210589
(43) Date of publication of application: 02.10.2024
(73) Proprietor: VITO NV, 2400 Mol (BE)
(72) Inventor: BOUWMAN, Bert, 2400 Mol (BE); BULUT, Metin, 2400 Mol (BE); BIRDJA, Yuvraj Y., 2400 Mol (BE); VAES, Jan, 2400 Mol (BE)
(74) Representative: Arnold & Siedsma
(86) International application number: PCT/EP2022/083047
(87) International publication number: WO 2023/094487

(56) References cited:
- WO-A1-2022/040784
- WO-A1-2022/096644
- US-A1- 2010 205 856
- US-B1- 8 137 527

## Description

### FIELD OF THE INVENTION

The present invention is related to a system and method for the removal of carbon dioxide from an atmosphere, more particularly by removing carbon dioxide from an atmosphere using alkaline solutions and water electrolysis, which produces hydrogen.

The system and method are based on improvements related to the electrolyser which is fed by a CO₂-rich, post-capture (bi)carbonate solution, wherein said improvements enable isolation of a 85:15 wt.% (or 66:34 vol.%) CO₂/O₂ gas mixture from the anolyte during operation, with an in line CO₂/O₂ separation at the anode of the electrolyser.

### BACKGROUND TO THE INVENTION

Carbon dioxide continues to build up in the environment. According to the National Oceanic and Atmospheric Administration (NOAA), the growth of carbon dioxide in the earth's atmosphere was 3 parts per million (ppm) per year in 2015 and 2016, and 2 ppm in 2017. Techniques to remove carbon dioxide from the air have become a critical area of research.

CO₂-emissions from industry and electricity production consists of large and localized streams (100 kt to 1 Mt per year) and smaller point sources with cumulative emissions in the Mt range. It is recognized that CO₂ capture at these point sources is the border stone of emission reduction, and that even in case existing value chains proceed without change, yearly emission reduction by capture remains important. Novel more environmentally friendly production technologies can of course, reduce CO₂ capture need, if they could be implemented faster or cheaper.

As mentioned above, it is an object of the present invention to provide a CO₂ capture method and system using water electrolysis which produces O₂ and hydrogen. The market demand for hydrogen has grown significantly over the recent years with growth rates from 3.5 to 6 %. The chemical industry represents the largest demand, with the refining industry as an important end-user (25 % of total demand). Smaller end users are steel producers apply H₂ for direct reduction of iron ore (3 %). This industry plays an important role, as CO₂ emitter and depends on carbon-based feedstocks for production of (in)organic chemicals. This industry is energy-intensive and accordingly could also acts as enabler in the energy sector and its renewable transition, with the development of large-scale (Carbon Capture Use (CCU) / Carbon Capture Storage (CCS) Hubs through their industrial clusters and connections.

Current technologies of CCU and CCS are typically based on scrubbing with amine solutions. An alternative is potassium carbonate capture that combines low capture costs with little toxicity, ease of regeneration, low corrosiveness, high stability and favorable absorption capacity. As a result, the process has been applied in more than 700 plants. The process is based on (bi)carbonate cycles, where dissolved K₂CO₃ captures CO₂, resulting in KHC0₃, which is pre-crystallized and dissociated as solid into CO₂ and carbonate above 100°C. However, absorption kinetics are rather slow, which can be remediated by using engineered (thermostable) carbonic anhydrase enzymes, and doesn't produce Hydrogen often used by the energy-intensive industries mentioned herein before. US 2010/205856 discloses a method and system for removing carbon dioxide (CO2) from an atmosphere and generating hydrogen comprising;- Capturing carbon dioxide from the atmosphere in an aqueous alkaline capture solution. Feeding the thus obtained aqueous (bi)carbonate solution to the anode cell of a water electrolyser. OER in the aqueous (bi)carbonate solution at the anode with formation of CO2 and O2. HER at the cathode with formation of H2 and regeneration of the aqueous alkaline capture solution so that the anode cell of the alkaline water electrolyser comprises an integrated CO2 / O2 separator wherein the aqueous alkaline capture solution is selected from a KOH or a NaOH solution with a pH of at least 7 wherein the anode cell comprising the integrated CO2 / O2 separator is configured to perform the OER of the (bi)carbonate solution at a temperature of 20-100C and pressure of 1.3 atm.

There is accordingly a need for a cost-competitive CCU system that combines the supply of low cost CO₂ and green H₂ at a point sources of CO₂ emission. It is an object of the present invention to provide such CCU/CCS system relying on an electrolyser which produces O₂ and H₂ from water, and that comprises an integrated CO₂ capture and release configuration. This system of integrated CO₂ capture and Hydrogen production will hereinafter also be referred to as ICO₂CH system.

### SUMMARY OF THE INVENTION

The present invention provides a method according to claim 1.

As is generally known, the overall reaction of water electrolysis can be divided into two half-cell reactions: hydrogen evolution reaction (HER) and oxygen evolution reaction (OER). HER is the reaction where water is reduced at the cathode to produce H₂, and OER is the reaction where water is oxidized at the anode to produce O₂. Using an alkaline capturing solution, the electrolyser used is an alkaline water electrolyser, wherein the alkaline capturing solution, regenerated at the cathode typically comprises hydroxide solutions of alkali metals (e.g., sodium and potassium) and alkaline earth metals (e.g., calcium) with a pH of at least 7. In a particular embodiment the aqueous alkaline capture solution is selected from a KOH or a NaOH solution. Key to the method according to the invention is the presence of the integrated CO₂/ O₂ separator in the anode cell of the electrolyser. This integrated configuration allows the ICO₂CH system for example to be part of oxy-fuel combustion in a reciprocating engine with CO₂ dilution. In this combustion mode, some or all of the incoming air is replaced with a mixture of oxygen and CO₂ recirculated from the exhaust of the engine. The quantity of CO₂ that can be fed back to the engine intake is dependent on the concentration of oxygen in the fuel/oxidizer mixture. The stream of CO₂/O₂ produced at the anode of the ICO₂CH system, can be directly valorised by a natural gas (NG) fuelled Internal Combustion (IC) engine to realise ultra-low carbon emitting, partial oxy-fuel combustion, i.e. displacement of a portion of the engine air with a stream of CO₂/O₂ oxidizer. With an engine appropriately sized to a given electrolyser rating, a substantial portion of CO₂ remains captive in the system, as the CO₂ in engine exhaust is combined with KOH and recirculated to the electrolyser, where CO₂ is eventually produced from the anode and cycled back to engine as diluent for the partial oxy-fuel combustion process. It is accordingly an object of the present invention to the use of the ICO₂CH system as part oxy-fuel combustion in a reciprocating engine with CO₂ dilution.

In another aspect the present invention provides a system according to claim 5.

Such set-up accordingly allows an instant and in-line separation of the Oxygen produced at the anode without the need of an additional CO₂ / O₂ separator. As such it simplifies the installation, and enables for example, the system according to the invention to be part of oxy-fuel combustion in a reciprocating engine with CO₂ dilution.

In the system according to the invention, and relying on an aqueous alkaline solution-based CO₂ capturing system, the OER at the anode is expected to yield CO₂/O₂ mixtures comprising a mole fraction of at least 70% CO₂; in particular from about 70:30 CO₂:O₂ to about 85:15 CO₂:O₂; more in particular from about 80:20 CO₂:O₂ to about 85:15 CO₂:O₂. For such CO₂/O₂ mixtures the anode is kept at temperatures from about 0°C to about -40°C and respective pressure from about 50 bar to about 10 bar.

### BRIEF DESCRIPTION OF THE DRAWINGS

Figure 1 - Schematic cell set-up of an alkaline water electrolyser involving 1) OER and acidification of (bi)carbonate solution to form CO₂ and O₂ at the anode, 2) Cation (M⁺) transport through the membrane and 3) HER and MOH regeneration, at the cathode.

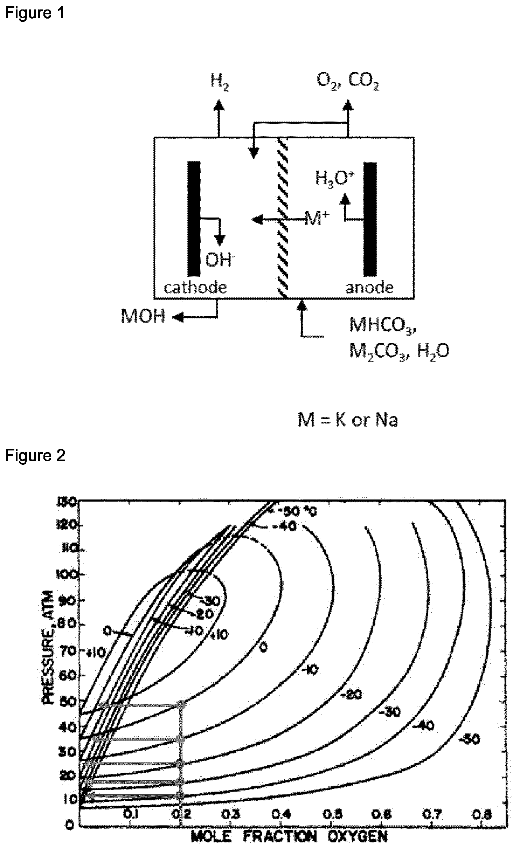

Figure 2 - Isotherms for CO₂-O₂ mixtures. Arrows indicate for a CO₂:O₂ mixture with a O₂ mole fraction of 0.2 the minimal pressures at which CO₂ is still in the liquid phase at the indicated temperatures of the crossing isotherms. For example for the isotherm of 0°C the pressure equals 48 atm; for the isotherm of -10°C the pressure equals 35 atm; for the isotherm of -20°C the pressure equals 25 atm; for the isotherm of -30°C the pressure equals 18 atm; for the isotherm of -40°C the pressure equals 12 atm. Depending on the temperature at which the anode is kept, a different minimal pressure well be required to keep the CO2 the liquid phase. In an embodiment according to the invention the temperature will be kept at freezer temperatures ranging from about -15°C to about -20°C, whilst keeping a minimal pressure of 30 atm. 1 atm corresponds to 1,01325 bar.
Figure 3 - The proportion of combustion CO₂ emissions that are recirculated back to a stoichiometric, natural gas reciprocating engine from the electrolyser anode as a function of the volume of intake air replaced with a 34% O₂/66% CO₂ mixture.
Figure 4 - Accumulated charge (solid line) and corresponding proton concentration (dots) during the chronopotentiometry experiment.
Figure 5 - Gas composition of the head space of the anodic compartment. At time 0 and from bottom to top the graph shows first (1) CO₂, next (2) O₂ and finally (3) N₂. To the right N₂ is displaced by CO₂ with O₂ remains more or less stable over time.

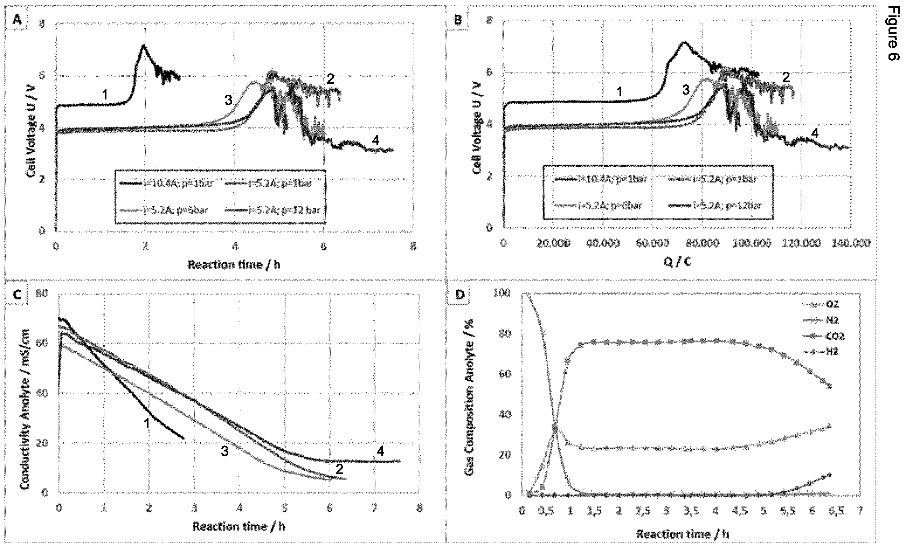

Figure 6 - Cell voltage plotted as a function of (A) reaction time and (B) charge passed for experiments at p = 1, 6 and 12 bar. Figure 6 (C) is a plot of the anolyte conductivity versus reaction time for experiments at p = 1, 6 and 12 bar. For Figures 6 (A) to (C) curve (1) corresponds to i=10.4A: p=1bar - curve (2) corresponds to i=5.2A: p=1bar - curve (3) corresponds to i=5.2A: p=6bar - curve (4) corresponds to i=5.2A: p=12bar Figure 6 (D) provides the evolution of the anolyte gas composition during the reaction for the experiment at I = 400 mA/cm₂ and p = 1 bar with at 1h from bottom to top H₂, N₂, O₂, CO₂ again showing the theoretical ratio of CO₂/O₂ of 4 when steady state is reached.

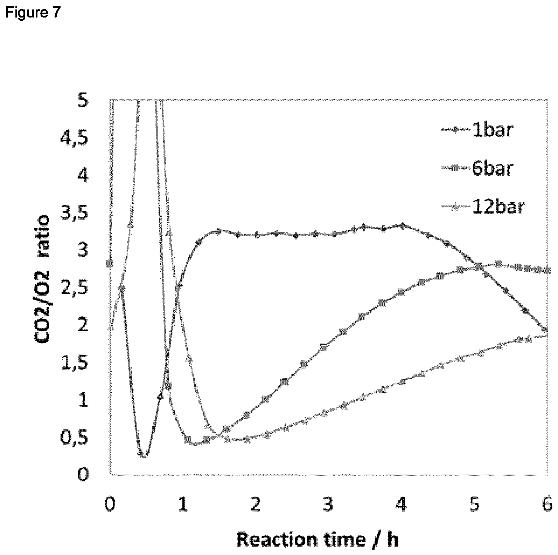

Figure 7 - CO₂/O₂ ratio during the reaction for experiments at different pressures. At 4h from top to bottom, pressure at 1bar, 6bar, and 12bar.
Figure 8 - Gas composition during reaction at p = 12 bar with the change in signals due to depressurization encircled. At 4h from top to bottom N₂, CO₂, O₂, and H₂.

### DETAILED DESCRIPTION OF THE INVENTION

The present invention is directed to an improved system and method for capturing CO₂ from an atmosphere and converting it in an output gas for valorisation such as green H₂ use, Carbon Capture Use (CCU), Carbon Capture Storage (CCS) and partial oxy-fuel combustion. The system and method herein disclosed are based on an electrolyser as core technology in combination with CO₂ capturing technology relying an alkaline capturing solution. Compared to existing systems and methods the present invention differs at least in the configuration of the reaction environment at the anode of the according to the independent claims 1 and 5.

A schematic representation of the cell setup of an electrolyser is provided in figure 1. It shows M⁺ transport across an ion-permeable membrane held between the two electrodes. As membranes for electrolysis, asbestos, nonwoven fabric, ion exchange membranes, polymer porous membranes, composite membranes of inorganic substances and organic polymers, and the like have been proposed. For example, JP2008-144262 includes an organic fiber cloth incorporated in a mixture of a hydrophilic inorganic material of calcium phosphate compound or calcium fluoride and an organic binder selected from polysulfone, polypropylene, and polyvinylidene fluoride. An ion permeable diaphragm is shown. Further, for example, in JP62-196390, a granular inorganic hydrophilic material selected from antimony, zirconium oxide and hydroxide, and a fluorocarbon polymer, polysulfone, polypropylene, polyvinyl chloride, and polyvinyl butyral are selected. An ion permeable membrane comprising stretched organic fiber fabrics is shown in a film-forming mixture consisting of a modified organic binder. The electrolyser used in the context of the invention is in particular a water electrolyser, more in particular an alkaline water electrolyser.

As part of the system any currently known CO₂ Capturing technologies using an aqueous alkaline solution to absorb the CO₂ can be used. Various scrubbing processes have been proposed to remove CO2 from the air, or from flue gases, but for use in the ICO2CH system according to the invention, the scrubbing process is preferably based on a potassium or sodium hydroxide solution. The CO₂ is absorbed in the solution to produce the corresponding (bi)carbonate. The CO₂ is subsequently released by applying a nominal voltage across the (bi)carbonate solution in the electrolyser. In general, the alkaline capturing solution is selected from hydroxide solutions of alkali metals (e.g., sodium and potassium) and alkaline earth metals (e.g., calcium) with a pH of at least 7.

According to the invention the anode cell is configured to perform the OER of the (bi)carbonate solution at pressures from about and between 10 bar to up to 50 bar and at reduced temperatures from about and between 0°C to -40 °C.

In an even further embodiment the cathode cell is configured to be operated at pressures up to 70 bar. If a a common pressure is maintained at both the anode and the cathode cell of the electrolyser, a pressure difference across the ion-permeable membrane held between the two electrodes can be prevented, simplifying the design of the electrolyser.

In an embodiment according to the invention the methods or systems as herein provided are further characterized in that the cathode is configured to perform the HER with formation of H₂ and regeneration of the aqueous alkaline capture solution at pressures up to 70 bar; in particular at pressures from about and between 10 bar to up to 50 bar.

In another embodiment according to the invention the methods or systems as herein provided are further characterized in that the HER at the cathode and the OER at the anode are performed at the same pressure from about and between 10 bar to up to 50 bar.

The methods and systems of the present invention produce high purity CO₂ and O₂ streams which make it suitable in oxy-fuel combustion. Thus in a further aspect the present invention provides the use of the ICO2CH system as defined in any of the foregoing embodiments as part oxy-fuel combustion in a reciprocating engine with CO₂ dilution.

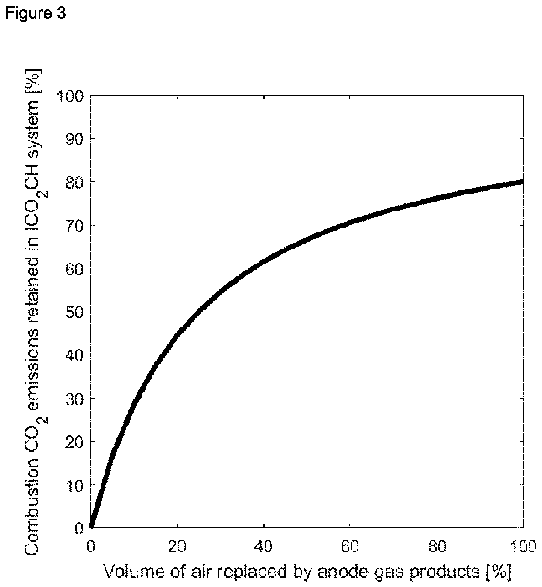

As an example of the potential CO₂ reduction, when using the ICO2CH system as part of an oxy-fuel combustion, consider a single 500 kW natural gas-fired reciprocating engine that is used to produce electricity and operates for the equivalent of 300 days in a year. This engine operates at stoichiometry such that all the oxygen is used to oxidize the fuel. Also, take the anode product stream from the electrolyser to have a nominal composition of 34 % O₂ and 66 % CO₂ by volume. As the incoming air to the engine is replaced by the recirculated anode gas mixture, a portion of the combustion CO₂ emissions are retained in the ICO2CH system, therefore decreasing the carbon-intensity of the combustion process. Figure 3 illustrates this concept for a range of volumetric air replacement by the electrolyser anode products.

As shown, replacing only 25 % of the incoming air to the engine with the O₂-CO₂ mixture results in a system retention of 50 % of the exhaust CO₂ emissions per unit of fuel combusted. At this level of air replacement (and assuming the engine is able to operate robustly in a partial oxy-fuel combustion mode), a 500 kW, state-of-the-art natural gas generator set running for 300 days per year at a fuel conversion efficiency of 30 % (including both the efficiency of the engine and generator) would avoid nearly 1100 metric tons of CO₂. This figure discounts the possibility for increasing engine efficiency by operating with excess oxidizer relative to the fuel (lean-burn) or other advanced combustion strategies, and therefore this reduction is considered conservative. In short, the integrated electrolyser and reciprocating engine system within ICO2CH has a significant potential to abate carbon emissions related to heat and power generation.

A set of electrolysis experiments were performed to underscore the conceptual workability of the method and systems of the invention. In a first experiment (Example 1) it is demonstrated that an ICO2CH system, for removing carbon dioxide (CO₂) from an atmosphere and generating hydrogen, in agreement with Figure 1 will actually work in a water electrolyser with the formation of H₂ and regeneration of the aqueous alkaline capture solution, with the release of CO₂ at the anode. In a second example (Example 2) it is further demonstrated that an in situ separation of CO₂ and O₂ at the anode can be further controlled without affecting the electrochemical cell performance (cell voltage / current / conductivity).

### Example 1 not according to the invention

Electrolysis experiments have been carried out in a two-compartment cell (H-cell) under the following conditions:
- Electrolyte (anolyte and catholyte): 0.5M KHCO₃
- Working Electrode (WE) = DSA (anode)
- Counter Electrode (CE) = carbon felt
- Anion exchange membrane
- Room temperature
- Ambient pressure

Chronopotentiometry (CP) at 4 different currents (25, 50, 100, 200 mA) was carried out each for 2 hours. Gas analysis of the headspace of the anolyte is performed with Differential Electrochemical Mass Spectrometry (DEMS). Moreover, the pH is monitored as a function of the time.

A schematic of the experimental setup is depicted in Figure 1

### Results & Discussion

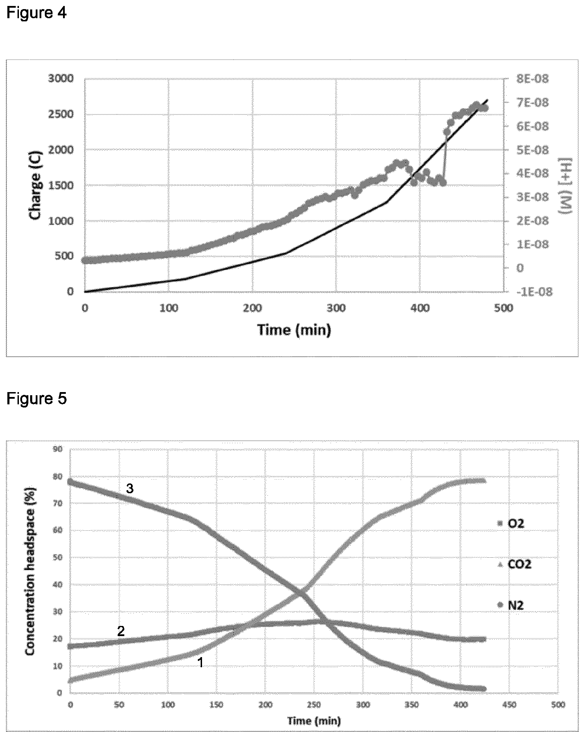

In Figure 4, the accumulated charge for the chronopotentiometry at 25, 50, 100, 200 mA is shown. Based on the measured pH, the increase of H⁺ concentration in the anolyte is plotted on the right y-axis. The sudden decrease in [H⁺] around t = 400 minutes is presumably due to gas bubbles that block the pH sensor. The protons are produced by the oxygen evolution reaction (OER) given in Eq. 1a (acidic media) and Eq. 1b (alkaline media).

2 H₂O → O₂ + 4H⁺ +4e Eq. 1a

4 OH⁻ → O₂ + 2 H₂O + 4e⁻ Eq. 1b

Simultaneously, hydrogen evolution reaction (HER) occurs at the cathode leading to the formation of H₂ (not measured). It is clearly seen that the trend of [H⁺] follows the accumulated charge vs. time.

Moreover, the gases in the headspace were continuously measured with Differential Electrochemical Mass Spectrometry (DEMS). In Figure 5, the evolution of the gas composition of the headspace of the anodic compartment is shown. N₂, which is present from the start of the experiments is decreasing during the experiments. The trends of the gases in time can be explained by CO₂ production which displaces N₂ and O₂ in the headspace.

In Figure 4, the ratio of the CO₂/O₂ signals are plotted together with the [H+] vs. time. The increase of CO₂ in the headspace is proportional with the charge (H⁺ formation rate), since the protons that are formed from Eq. 1 lead to protonation of HCO₃- present in the anolyte (Eq. 2) which results in **liberation of CO₂** according to the following acid-base reaction.

H⁺ + HCO₃ → H₂O + CO₂ Eq. 2

Since the OER produces 4 protons per O₂ molecule, and 1 proton is consumed for the formation of CO₂, the theoretical ratio of CO₂/O₂ should be 4. This theoretical value is **also observed** after steady state is reached for the last CP of 200 mA in Figure 5.

Similar trends are observed in case of a nafion membrane or different electrolytes such as KOH, NaOH or K₂CO₃ (data not shown). This experiment accordingly demonstrates the working principle of the ICO2CH concept as brought forward in the instant application.

**Example 2** not according to the invention In this example, it is demonstrated that the CO₂ release at the anode can be controlled without affecting the electrochemical cell performance. Thereto the eventual effect of pressure on the ICO2CH system has been studied.

Experiments are carried out employing a 13 cm² round cell using a Nafion membrane, a Ni foam (1.6mm 95% porosity) as well as a wide-meshed Ni mesh in between Ni foam and the current collector to achieve a zero-gap configuration. During the experiment, a constant temperature is desired, so the cryostat is operated at 25°C during the whole experiment. Prior to each experiment, the catholyte and anolyte vessels are purged with nitrogen and filled with respectively 800 mL of 1M KOH and 800 mL of 1M KHCO₃.

Gas analysis of the headspace of the anolyte is performed with Differential Electrochemical Mass Spectrometry (DEMS). The release of gases and mass balance of the electrolyte are studied during water electrolysis (HER at the cathode and OER at the anode) at (1) atmospheric pressure, (2) p = 6 bar and (3) p = 12 bar. Pressurization of the cell is realized by purging nitrogen gas. The experiments run at least until steady state is reached in the gas phase (i.e. at least till the expected CO₂/O₂ ratio of 4 is reached, similar to previous experiments in the H-cell), ideally longer, or until the cell voltage or ohmic heating becomes critical.

A current density of 800 mA/cm₂ or 400 mA/cm₂ is applied (galvanostatic operation), corresponding to 10.4 A or 5.2 A total current. The electrolyte is **recirculated** with a flow rate is 500 mL/min.

### Results & Discussion

Looking at the cell voltage for the different experiments, it can be seen from figures 6(A) and 6(B) that for the experiment at I = 800 mA/cm² (i=10.4A; p=1 bar - Top graph both in 6(A) and 6(B)) this increase starts earlier, while for I = 400 mA/cm² (i=5.2A) the onset is later. It can be seen that for each experiment, the cell voltage starts to increase after a certain amount of time, when ca. 60-70 kC have passed (curves for I = 400 mA/cm²). **Fout! Verwijzingsbron niet gevonden.C,** shows that the initial conductivity is lower for I = 400 mA/cm₂ at 6 bar (in figure 6(C) at 4h from bottom to top curves for I = 400 mA/cm₂ at respectively 6bar, 1bar and 12bar), which may explain a slightly earlier onset of the cell voltage increase. There is **no qualitative difference** observed for the different pressures.

The increase in cell voltage when ca. 60-70 kC have passed is related to the decrease in conductivity of the anolyte. This is caused by the transport of K⁺ ions from the anolyte to the catholyte, which is dependent on the current (charge). It can be seen that the increase in cell voltage after ca. 4 hours of operation also induces a change in gas composition. It is believed that the membrane is damaged (due to high cell voltage stemming from ion depletion on one side of the membrane), leading to cross over of gases as the CO₂ concentration starts to decrease while the H₂ concentration starts to increase.

For all pressures at I = 400 mA/cm², the liberation of CO₂ could be observed (data not shown) which means that the ICO2CH principle at elevated pressure is proven. However, and as expected the CO₂ flow rate decreases with increasing pressure. In other words, the CO₂/O₂ ratio measured in these experiments is pressure dependent.

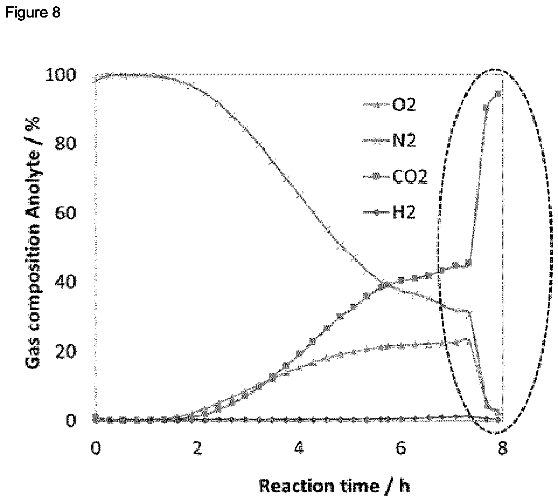

The reason for this is the increasing CO₂ solubility with pressure. This is also visible from the strong increase in CO₂ concentration during depressurization of the system from p = 12 bar as shown by the dashed circle in Figure 8.

For the ICO2CH process at elevated pressure, it can be concluded that the CO₂ release can be controlled through dissolution in the anolyte, and the contribution of which increases with the pressure.

## Claims

1. A method of removing carbon dioxide (CO₂) from an atmosphere and generating hydrogen, comprising;
- Capturing carbon dioxide from the atmosphere in an aqueous alkaline capture solution;
- Feeding the thus obtained aqueous (bi)carbonate solution to the anode cell of a water electrolyser;
- OER in the aqueous (bi)carbonate solution at the anode with formation of CO₂ and O₂;
- HER at the cathode with formation of H₂ and regeneration of the aqueous alkaline capture solution; **characterized in that** the anode cell of the electrolyser comprises an integrated CO₂ / O₂ separator configured on performing the OER of the alkaline capture solution at pressures from and between 10 bar to up to 50 bar and at reduced temperatures from and between 0°C to -40 °C, such that the produced Oxygen will be in the gas phase whilst the produced Carbon Dioxide remains in solution.

2. The method according to claim 1 wherein the water electrolyser is an alkaline water electrolyser.

3. The method according to claims 1 or 2 wherein the alkaline capturing solution, is selected from hydroxide solutions of alkali metals and alkaline earth metals with a pH of at least 7.

4. The method according to any one of the previous claims wherein the aqueous alkaline capture solution is selected from a KOH or a NaOH solution.

5. A system, herein also referred to as the ICO2CH system, for removing carbon dioxide (CO₂) from an atmosphere and generating hydrogen, comprising ;
- An aqueous alkaline solution -based CO₂ capturing system;
- A water electrolyser, wherein;
∘ the anode cell has an inlet for and is configured for OER of an aqueous (bi)carbonate solution coming from the aqueous alkaline solution -based CO₂ capturing system at the anode with formation of CO₂ and O₂;
∘ the cathode is configured for HER with formation of H₂ and has an outlet for a regenerated aqueous alkaline capture solution to the aqueous alkaline solution -based CO₂ capturing system; and
**characterised in that** the anode cell of the electrolyser comprises an integrated CO₂ / O₂ separator configured on performing the OER of the alkaline capture solution at pressures from and between 10 bar to up to 50 bar and at reduced temperatures from and between 0°C to -40 °C, such that the produced Oxygen will be in the gas phase whilst the produced Carbon Dioxide remains in solution.

6. The method or system according to any one of the previous claims, wherein the cathode cell is configured to perform the HER with formation of H₂ and regeneration of the aqueous alkaline capture solution at pressures up to 70 bar.

7. The method or system according to any one of the previous claims, wherein the cathode cell is configured to perform the HER with formation of H₂ and regeneration of the aqueous alkaline capture solution at pressures from and between 10 bar to up to 50 bar.

8. The method or system according to any one of claims 5 to 7 wherein the HER at the cathode and the OER at the anode are performed at the same pressure; in particular at the same pressure from and between 10 bar to up to 50 bar.

9. Use of the ICO2CH system as defined in any one of claims 5 to 8 as part oxy-fuel combustion in a reciprocating engine with CO₂ dilution.

## Patentansprüche

1. Verfahren zum Entfernen von Kohlendioxid (CO₂) aus einer Atmosphäre und Generieren von Wasserstoff, umfassend;
- Einfangen von Kohlendioxid aus der Atmosphäre in einer wässrigen alkalischen Einfanglösung;
- Zuführen der so erhaltenen wässrigen (Bi)carbonatlösung zu der Anodenzelle eines Wasserelektrolyseurs;
- OER in der wässrigen (Bi)carbonatlösung an der Anode unter Ausbildung von CO₂ und O₂;
- HER an der Kathode unter Ausbildung von H₂ und Regeneration der wässrigen alkalischen Einfanglösung; **dadurch gekennzeichnet, dass** die Anodenzelle des Elektrolyseurs einen integrierten CO₂/O₂-Separator umfasst, der für ein Durchführen der OER der alkalischen Einfanglösung bei Drücken von und zwischen 10 Bar bis zu 50 Bar und bei reduzierten Temperaturen von und zwischen 0 °C bis -40 °C derart konfiguriert ist, dass der erzeugte Sauerstoff in der Gasphase vorliegt, während das erzeugte Kohlendioxid in Lösung verbleibt.

2. Verfahren nach Anspruch 1, wobei der Wasserelektrolyseur ein alkalischer Wasserelektrolyseur ist.

3. Verfahren nach Anspruch 1 oder 2, wobei die alkalische Einfanglösung aus Hydroxidlösungen von Alkalimetallen und Erdalkalimetallen mit einem pH-Wert von mindestens 7 ausgewählt ist.

4. Verfahren nach einem der vorstehenden Ansprüche, wobei die wässrige alkalische Einfanglösung aus einer KOH- oder einer NaOH-Lösung ausgewählt ist.

5. System, hierin ebenso als das ICO2CH-System bezeichnet, zum Entfernen von Kohlendioxid (CO₂) aus einer Atmosphäre und Generieren von Wasserstoff, umfassend;
- ein CO₂-Einfangsystem basierend auf einer wässrigen alkalischen Lösung,
- einen Wasserelektrolyseur, wobei;
∘ die Anodenzelle einen Einlass für eine OER einer wässrigen (Bi)carbonatlösung, kommend aus dem CO₂-Einfangsystem basierend auf einer wässrigen alkalischen Lösung, aufweist und für diese konfiguriert ist, an der Anode unter Ausbildung von CO₂ und O₂;
∘ die Kathode für eine HER unter Ausbildung von H₂ konfiguriert ist, und einen Auslass für eine regenerierte wässrige alkalische Einfanglösung zu dem CO₂-Einfangsystem basierend auf einer wässrigen alkalischen Lösung aufweist; und
**dadurch gekennzeichnet, dass** die Anodenzelle des Elektrolyseurs einen integrierten CO₂/O₂-Separator umfasst, der für das Durchführen der OER der alkalischen Einfanglösung bei Drücken von und zwischen 10 Bar bis zu 50 Bar und bei reduzierten Temperaturen von und zwischen 0 °C bis -40 °C derart konfiguriert ist, dass der erzeugte Sauerstoff in der Gasphase vorliegt, während das erzeugte Kohlendioxid in Lösung verbleibt.

6. Verfahren oder System nach einem der vorstehenden Ansprüche, wobei die Kathodenzelle konfiguriert ist, um die HER unter Ausbildung von H₂ und Regeneration der wässrigen alkalischen Einfanglösung bei Drücken bis zu 70 Bar durchzuführen.

7. Verfahren oder System nach einem der vorstehenden Ansprüche, wobei die Kathodenzelle konfiguriert ist, um die HER unter Ausbildung von H₂ und Regeneration der wässrigen alkalischen Einfanglösung bei Drücken von und zwischen 10 Bar bis zu 50 Bar durchzuführen.

8. Verfahren oder System nach einem der Ansprüche 5 bis 7, wobei die HER an der Kathode und die OER an der Anode bei dem gleichen Druck durchgeführt werden; insbesondere bei dem gleichen Druck von und zwischen 10 Bar bis zu 50 Bar.

9. Verwendung des ICO2CH-Systems nach einem der Ansprüche 5 bis 8 als Teil einer Oxyfuel-Verbrennung in einem Hubkolbenmotor mit CO₂-Verdünnung.

## Revendications

1. Procédé d'élimination du dioxyde de carbone (CO₂) d'une atmosphère et de production d'hydrogène, comprenant ;
- la capture du dioxyde de carbone de l'atmosphère dans une solution de capture alcaline aqueuse ;
- l'alimentation de la solution aqueuse de (bi)carbonate ainsi obtenue dans la cellule anodique d'un électrolyseur d'eau ;
- la réalisation d'une réaction OER dans la solution aqueuse de (bi)carbonate à l'anode avec formation de CO₂ et de O₂ ;
- la réalisation d'une réaction HER à la cathode avec formation de H₂ et régénération de la solution de capture alcaline aqueuse ; **caractérisé en ce que** la cellule anodique de l'électrolyseur comprend un séparateur CO₂/O₂ intégré configuré pour effectuer la réaction OER de la solution de capture alcaline à des pressions comprises entre et allant de 10 bar à 50 bar et à des températures réduites comprises entre et allant de 0 °C à -40 °C, de sorte que l'oxygène produit soit dans la phase gazeuse tandis que le dioxyde de carbone produit reste en solution.

2. Procédé selon la revendication 1, dans lequel l'électrolyseur d'eau est un électrolyseur d'eau alcaline.

3. Procédé selon les revendications 1 ou 2, dans lequel la solution de capture alcaline est choisie parmi des solutions d'hydroxydes de métaux alcalins et de métaux alcalino-terreux ayant un pH d'au moins 7.

4. Procédé selon l'une quelconque des revendications précédentes, dans lequel la solution de capture alcaline aqueuse est choisie parmi une solution de KOH ou de NaOH.

5. Système, également appelé ici système ICO2CH, d'élimination du dioxyde de carbone (CO₂) d'une atmosphère et de production d'hydrogène, comprenant ;
- un système de capture de CO₂ basé sur une solution alcaline aqueuse ;
- un électrolyseur d'eau, dans lequel ;
∘ la cellule anodique possède une entrée pour et est configurée pour une solution aqueuse de (bi)carbonate provenant du système de capture de CO₂ à base de solution alcaline aqueuse à l'anode avec formation de CO₂ et de O₂ ;
∘ la cathode est configurée pour la réaction HER avec formation de H₂ et possède une sortie pour une solution de capture alcaline aqueuse régénérée vers le système de capture de CO₂ à base de solution alcaline aqueuse ; et
**caractérisé en ce que** la cellule anodique de l'électrolyseur comprend un séparateur CO₂/O₂ intégré configuré pour effectuer la réaction OER de la solution de capture alcaline à des pressions comprises entre et allant de 10 bar à 50 bar et à des températures réduites comprises entre et allant de 0 °C à -40 °C, de sorte que l'oxygène produit soit dans la phase gazeuse tandis que le dioxyde de carbone produit reste en solution.

6. Procédé ou système selon l'une quelconque des revendications précédentes, dans lequel la cellule cathodique est configurée pour effectuer la réaction HER avec formation de H₂ et régénération de la solution de capture alcaline aqueuse à des pressions allant jusqu'à 70 bar.

7. Procédé ou système selon l'une quelconque des revendications précédentes, dans lequel la cellule cathodique est configurée pour effectuer la réaction HER avec formation de H₂ et régénération de la solution de capture alcaline aqueuse à des pressions allant de et comprises entre 10 bar et 50 bar.

8. Procédé ou système selon l'une quelconque des revendications 5 à 7, dans lequel la réaction HER à la cathode et la réaction OER à l'anode sont effectuées à la même pression ; en particulier à la même pression comprise entre et allant de 10 bar à 50 bar.

9. Utilisation du système ICO2CH selon l'une quelconque des revendications 5 à 8 dans le cadre d'une oxycombustion dans un moteur alternatif avec dilution de CO₂.
